# EUROPÄISCHE PATENTANMELDUNG

(11) **EP 4 843 927 A1**
(43) Veröffentlichungstag der Anmeldung: **25.11.2026**
(21) Anmeldenummer: 26167721.5
(22) Anmeldetag: 25.03.2026
(51) Int. Cl.: B65G 21/00

(54) **VORRICHTUNG ZUM BEFÖRDERN VON SACHEN UND/ODER PERSONEN**

(30) Priorität: 09.04.2025 DE 102025113942
(71) Anmelder: MST GmbH Metall- und Schweißtechnik, 56656 Brohl-Lützing (DE)
(72) Erfinder: Huber, Christian, 56651 Niederzissen (DE)
(74) Vertreter: Strauss, Peter

(57) **Zusammenfassung**

Vorrichtung zum Befördern von Sachen und/oder Personen, umfassend eine Wegstreckeneinheit (100) zum Überbrücken einer Beförderungsstrecke durch zumindest eine Durchgangsöffnung (D1; D2) mit erschwerter Personenzugänglichkeit, wobei die Wegstreckeneinheit (100) ein oder mehrere Wegstreckenmodule (100-1; 100-2; 100-3; 100-4) aufweist, wobei das oder die Wegstreckmodule (100-1; 100-2; 100-3; 100-4) Flanschmittel derart aufweisend und/oder ein oder mehrere Stützmodule (400-1; 400-2) zum Abstützen des oder der Wegstreckenmodule (100-1; 100-2; 100-3; 100-4) so vorsehbar sind, dass die Wegstreckeneinheit (100) vermittels der Wegstreckenmodule (100-1; 100-2; 100-3; 100-4) für die Sachen und/oder Personen beförderungsstabil auf die zu überbrückende Beförderungsstrecke durch die Durchgangsöffnung (D1; D2) angepasst implementierbar ist.

## Beschreibung

Vorrichtungen dieser Art sind überall dort zweckmäßig und wünschenswert, wo Wegstrecken z.B. durch Durchgangsöffnungen oder schwer zugängliche Überbrückungsbereiche überbrückt werden sollen, die ansonsten ohne die Wegstreckeneinheit nicht oder nur beschwerlich überbrückt oder durch- oder überquert werden können.

Solche Wegstrecken im Innen- oder Außenbereich befinden sich insbesondere im industriellen Bereich bei Tankanlagen, Silos, Brückenkorpusse oder sonstigen Bauten oder Behältern, die für Sachen oder Personen oder Tiere zwar grundsätzlich und im Regelfall zugänglich sind, z.B. über sogenannte Revisionsöffnungen oder durch andere Art von Zugängen, deren praktische Zugänglichkeit aber z.B. durch ihre Größe und/oder Begehbarkeit situationsbedingt und/oder aus praktischer Sicht erschwert oder gar verunmöglicht sein kann.

In diese Behälter oder Bauten kommt man z.B. durch die Öffnung nur gebückt oder kriechend, da die Zugangsöffnungen vielfach aus sicherheitstechnischen Gründen nur eine den gesetzlichen Anforderungen (noch) entsprechenden und damit für eine Person vergleichsweise geringe, womöglich nur gerade noch zugängliche Öffnungsweite aufweisen.

Die derart geringen Öffnungsweiten erschweren aber bereits im Regelfall den Transport von z.B. Personal und Werkzeug in das Objekt oder den Behälter.

Noch schwieriger wird die Situation, wenn eine Person oder Personen im Behälter aufgrund eines Notfalls nicht mehr eigenständig aus dem Behälter steigen können, sondern nur mit Hilfe anderer aus dem Behälter gerettet werden müssen.

Dabei sind die Durchgangsöffnungen gleichsam oft auch nicht schwellenfrei zugänglich, wobei nicht schwellenfrei in diesem Sinne vielfach bedeutet, dass für den Zugang erheblich hohe Schwellen überstiegen werden müssen, was unter Umständen auch den Einsatz einer Leiter oder die Nutzung einer vor und/oder hinter der Öffnung angebrachten Leiter notwendig machen kann. Auch Gräben oder Schächte müssen ggf. überbrückt werden.

Ferner wiederum ist in anderen Fällen die Zugänglichkeit konstruktionsbedingt. Dies gilt z.B. für sog. Brückenhohlkästen, in deren Inneren eine Vielzahl von Bodenschwellen in einem Abstand von 200mm bis 1200mm zu überbrücken sind, wenn die Hohlkästen, z.B. wegen Reparaturarbeiten oder Evakuierungsmaßnahmen aus welchen Gründen auch immer, begangen werden sollen oder in ihrer Mobilität eingeschränkte Personen und/oder Material aus den Hohlkästen befördert bzw. transportiert werden sollen.

An diese Thematik wird vorliegend erfindungsgemäß insbesondere angeknüpft.

Eine Aufgabe einer Ausführungsform der vorliegenden Erfindung kann daher darin gesehen werden, eine Vorrichtung für Objekte bereitzustellen, welche es auf flexible und einfache Art und Weise ermöglicht, Objekte entlang einer Beförderungsstrecke über zumindest einem Überbrückungsbereich mit z.B. erschwerter Zugänglichkeit und/oder Überwindbarkeit, wie z.B. bei einer Revisionsöffnung, ein oder mehreren Stufen oder eine oder mehreren Überbrückungslücken, zu überbrücken.

Nach einem Aspekt betrifft eine solche Ausführungsform nach einem möglichen erfindungsgemäßen Kerngedanken eine Vorrichtung zum Befördern von Objekten entlang einer Beförderungsstrecke über zumindest einen Überbrückungsbereich (L) umfassend eine Wegstreckeneinheit zum flexiblen Bereitstellen der Beförderungsstrecke , wobei die Wegstreckeneinheit ein oder mehrere Wegstreckenmodule aufweist, wobei das oder die Wegstreckmodule mit Flanschmitteln derart aufweisen und/oder verbindbar sind, dass die Wegstreckeneinheit ausgehend von einem ersten Wegstreckenmodule mit ein oder mehreren weiteren Wegstreckenmodule flexibel auf unterschiedliche Beförderungsstrecken ausbaubar ist und so flexibel umrüstbar ausgebildet ist, dass die Beförderbarkeit der Objekte über die Wegstreckeneinheit mit oder ohne Unterstützung durch Transporthilfsmitteln ausbildbar ist.

Objekte in diesem Sinne können sein: Tiere, Personen und/oder Sachen.

Dabei fungieren die Flanschmittel ferner insbesondere dazu, die Wegstreckeneinheit entlang der Beförderungsstrecke beförderungsstabil zu halten. Dies schließt zum einen ein, dass die Flanschmittel dazu dienen, unterschiedliche Wegstreckenmodule untereinander stabil zur Wegstreckeneinheit zu verbinden, wobei unterschiedliche Streckenverläufe berücksichtigbar sind, und gleichsam dafür Sorge getragen wird, dass die Wegstreckeneinheit entlang der Beförderungsstrecke und damit auch durch z.B. eine Durchgangsöffnung stabil steht.

Mehrere miteinander verbundenen Wegstreckenmodule können zum Überbrücken auf unterschiedlich große Überbrückungsbereiche einschließlich, zum Beispiel unterschiedlich breite oder tiefe Gräben oder aus anderen Gründen schwer oder situationsbedingt schwer zugänglichen Bereichen angepasst werden. Dabei können die Wegstreckenmodule auch dazu ausgebildet sein, Wegstreckenkurven einer Beförderungsstrecke zu überbrücken.

Dabei können Transporthilfsmittel im erfindungsgemäßen Sinne Mittel sein, die beim Befördern oder Passieren der Objekte über die durch die Wegstreckeneinheit bereitgestellte Beförderungsstrecke autonom oder unterstützend zum Einsatz kommen bzw. einsetzbar sind.

Dabei ist die erfindungsgemäße Vorrichtung mit und in den Wegstreckenmodulen ausgebildet und eingerichtet, die Transporthilfsmittel wahlweise und abhängig vom Transporterfordernis funktionsgerecht aufzunehmen.

Insbesondere im Fall von längeren Wegstrecken, die es zu überbrücken gilt, kann es auch vorteilhaft sein, wenn zur Stabilisierung der Wegstreckeneinheit über die Beförderungsstrecke hinweg ein oder mehrere erfindungsgemäße Stützmodule zum Abstützen der Wegstreckenmodule bzw. der Wegstreckeneinheit zum Einsatz kommen.

Die Wegstreckeneinheit bzw. die Wegstreckenmodule sind dabei so vorteilhaft ausgebildet, dass die Wegstreckeneinheit durch zumindest eine Durchgangsöffnung mit erschwerter Personenzugänglichkeit führbar bzw. legbar ist. Dabei kann die erschwerte Personenzugänglichkeit insbesondere darin bestehen, dass die Durchgangsöffnung nur nach einer Person bemessenen ist oder eine oder mehrere Personen nur gebückt und/oder knieend begehbar ist oder nur eine lichte Breite von kleiner gleich einem Meter aufweist. Zugänglichkeit kann aber auch dann vorliegen, wenn Überbrückungsbereich zu überbrücken sind, die insbesondere im Notfall oder auch bei Wartungsarbeiten schwierig zu überbrücken sind. Solche Überbrückungsbereich liegen zum Beispiel im Bereich von den bereits eingangs erwähnten 200 mm bis 1200 mm. Selbstverständlich können erfindungsgemäß auch noch deutlich größere Überbrückungsbereich überbrückt werden. Darüber hinaus können Überbrückungsbereich auch unsichere Geländeübergänge sein. Unsicher, weil deren Bodenbeschaffenheit womöglich unklar ist.

Dabei kann eine Weiterbildung darin bestehen, dass die Flanschmittel Führungs- und/oder Fixierkomponenten beinhalten. Im Vorsehen von diesen beiden Komponenten kann insbesondere der Vorteil gesehen werden, dass beim Zusammenbringen mehrerer Wegstreckenmodule die Wegstreckenmodule zunächst geführt so zusammenbringbar sind, dass im Anschluss die Wegstreckenmodule über die Fixierkomponenten kraft- und/oder formschlüssig verbindbar sind.

Die Führungskomponenten können dabei Führungsbolzen und Führungsöffnungen aufweisen, wobei mit den Führungsbolzen und Führungsöffnungen die Wegstreckenmodule zum einen zueinander optimal ausgerichtet werden können, und zum anderen können die Führungsbolzen in den Führungsöffnungen und in Doppelfunktion die Wegstreckeneinheit insbesondere gegen Vertikalkräfte, die beim Befördern von Objekten, insbesondere von Personen und/oder Sachen auftreten bzw. von diesen erzeugt werden, abstützen bzw. absichern, d.h. statisch stabil halten.

Natürlich können auch die Fixierkomponenten, neben ihrer Fixierfunktion, zur statischen Stabilität der Wegstreckeneinheit beitragen. Dabei kann eine Ausführungsform der Fixierkomponenten Flanschplatten umfassen, wobei die Flanschplatten eine Bolzenflanschplatte und eine Lochflanschplatte aufweisen.

Beim Verbinden von z.B. zweier Wegstreckenmodule sind Bolzenflanschplatte und Lochflanschplatte so aufeinander ausgerichtet, dass die an der Bolzenflanschplatte vorgesehenen Gewindebolzen in die Befestigungsöffnungen der Lochflanschplatte eingreifen, so dass die Gewindebolzen mit der Lochflanschplatte verschraubt werden können bzw. verschraubbar sind.

Eine vorteilhafte Weiterbildung der Flanschmittel besteht auch darin, dass für die Flanschmittel ein Fixiermechanismus zum Stabilisieren und/oder Befestigen der Wegstreckeneinheit in der Durchgangsöffnung vorgesehen ist.

Der Fixiermechanismus kann dabei aus einem Fixierflansch und einen Fixierschlitten ausgebildet sein, wobei der Fixierflansch am Fixierschlitten und der Fixierschlitten relativ verschiebbar an der Wegstreckeneinheit bzw. der Beförderungsstrecke angeordnet ist.

Die Anordnung erfolgt dabei vorzugsweise auf der Unterseite der Wegstreckeneinheit. Mit der relativen Verschiebbarkeit des Fixierflansches entlang der Beförderungsstrecke, kann insbesondere gewährleistet werden, dass bei auf die Beförderungsstrecke angepasster Wegstreckeneinheit und unabhängig davon, an welcher Stelle der Beförderungsstrecke die Wegstreckeneinheit die Durchgangsöffnung überbrückt, der Fixierflansch an die Durchgangsöffnung verfahrbar ist und die Wegstreckeneinheit mit dem Fixierflansch an der Durchgangsöffnung fixierbar ist.

Dabei kann der Fixiermechanismus gleichsam vorsehen, dass nicht nur der Fixierflansch an der Durchgangsöffnung fixierbar ist, sondern Gleiches auch für den Fixierschlitten an der Wegstreckeneinheit möglich ist, so dass auch so die Wegstreckeneinheit zur Durchgangsöffnung befestigbar ist.

Dabei kann eine Weiterbildung darin bestehen, dass entlang der Wegstreckeneinheit Schienenmittel vorgesehen sind, entlang derer bzw. auf denen der Fixierschlitten verschiebbar anordbar ist. Zum Fixieren des Fixierschlittens und damit auch der Wegstreckeinheit gegenüber der Durchgangsöffnung können insoweit auch eine Brems- oder Feststelleinheit vorgesehen sein.

Zum Fixieren des Fixierflansches an oder in der Durchgangsöffnung, sind erfindungsgemäß insbesondere zwei Ausführungsformen vorgesehen.

Bei der einen Ausführungsform beinhaltet der Fixierflansch eine Schiebeflanschplatte zur Anlage und Befestigung der Wegstreckeneinheit entlang der Durchgangsöffnung. Dabei kann die Schiebeflanschplatte am oder mit dem Rand der Durchgangsöffnung verschraubt werden. Hierzu kann an dem Rand der Durchgangsöffnung auch ein entsprechender Gegenflansch vorgesehen sein. Der Gegenflansch wirkt bei der Befestigung nicht nur stabilisierend mit Blick auf den Durchgangsöffnungsrand, sondern kann auch die Ausführung der Flanschverbindung mit der Schiebeflanschplatte vereinfachen und verbessern.

Eine weitere Ausführungsform des Fixierflansches kann in einem Auflageflansch bestehen. Der Auflageflansch dient in erster Linie einer stabilisierenden Auflage der Wegstreckeneinheit in der Durchgangsöffnung. Der Fixierflansch in Form eines Auflageflansch kann insbesondere dann in Frage kommen, wenn die Möglichkeit einer Fixierung entlang der Durchgangsöffnung nicht oder nur schwierig möglich ist. Denkbar sind natürlich auch Konstellationen einer Kombination aus Fixierung und Auflage.

Zur Auflage kann der Auflageflansch weiterbildend Auflagebolzen aufweisen, welche entlang der Innenseite auf der Innenseite der Durchgangsöffnung anliegend anordbar sind.

Ausgangspunkt kann dabei die Schiebeflanschplatte des Fixierflansches sein, wobei die Auflagebolzen in die Schiebeflanschplatte eingebracht, gegebenenfalls eingeschraubt werden. Die Auflagebolzen verlaufen dabei vorzugsweise parallel zur Unterseite der Wegstreckeneinheit und können so in der Durchgangsöffnung auf den Rand bzw. innseitig der Durchgangsöffnung zur Auflage kommen. Die Auflagebolzen können dazu einen auf den Öffnungsverlauf der Durchgangsöffnung ausgerichteten Auflageschaft aufweisen.

Eine erfindungsgemäße Weiterbildung beinhaltet insbesondere mit Blick auf die und als Teil der erfindungsgemäßen Transporthilfsmittel eine Befördereinheit und/oder ein Wegplattenelement auf.

Die Befördereinheit kann dabei als Einheit zum Befördern der Objekt dienen. Das Wegplattenelement kann die von der erfindungsgemäßen Vorrichtung geschaffene Beförderungsstrecke gangbar machen, wobei das Wegplattenelement auch als gangbar Beförderungsstrecke für die Befördereinheit ausgebildet sein kann.

Dabei kann eine Weiterbildung der Wegstreckeneinheit auch darin bestehen, dass die Wegstreckeneinheit ein Streckenbett derart beinhaltet, dass entlang der Beförderungsstrecke wahlweise eine im Streckenbett verfahrbare Befördereinheit und/oder zumindest ein Wegplattenelement vorsehbar ist.

Die verfahrbare Befördereinheit kann erfindungsgemäß insbesondere dann zum Einsatz kommen, wenn schwere Lasten auf bzw. entlang der Wegstreckeneinheit befördert werden sollen. Solche schweren Lasten können zum Beispiel in einer Person oder Sache gesehen werden, die z.B. im Rettungsfall über die erfindungsgemäße Wegstreckeneinheit befördert werden soll.

Zweck des Wegplattenelements kann es insbesondere sein, die Wegstreckeneinheit insbesondere für Personen begehbar zu machen.

Analog zur Wegstreckeneinheit, welche erfindungsgemäß vermittels unterschiedlicher Wegstreckenmodule anpassbar ausbaubar ist, so kann auch das Wegplattenelement aus ein oder mehreren Wegplattenstücken aufgebaut sein. Dabei können die einzelnen Wegplattenstücke so gebildet bzw. ausgebildet werden, dass sie in Struktur und Aufbau den unterschiedlichen Wegstreckenmodulen zugeordnet werden und in diesen zum Einsatz kommen können.

In vergleichbarer Analogie zu den Wegstreckenmodulen können die erfindungsgemäßen Wegplattenstücke über einen Verbindungsmechanismus miteinander verbunden werden.

Der erfindungsgemäße Verbindungsmechanismus kann dabei einen Steckmechanismus aufweisen. Der Steckmechanismus dient dem führenden und versteifenden Ausrichten der Wegplattenstücke in der Verbindung.

Der Steckmechanismus kann dabei folgendes aufweisen: auf einer ersten Seite des Wegplattenstücks einen Profilhohlraum, auf einer zweiten Seite des Wegplattenstück zumindest ein Steckelement, wobei der Profilhohlraum zum Steckelement so ausgebildet ist, dass im verbundenen Zustand zweier Wegplattenstücke das Steckelement vollständig und bündig und die Wegplattenstücke ausrichtend in den Profilhohlraum steckbar ist. Führend und versteifend kann in diesem Zusammenhang nicht nur ausrichtend heißen, sondern auch verdrehsicher und insbesondere statisch, die Gewichtsanforderung erfüllend stabil.

Dabei können als Steckelemente zum Beispiel Steckbolzen zum Einsatz kommen, wobei nach einer bevorzugten Ausführungsform diese Steckbolzen vorzugsweise paarweise zum Einsatz kommen.

Ferner kann nach einer Weiterbildung der Verbindungsmechanismus einen Rastmechanismus aufweisen, wobei für den Rastmechanismus auf der ersten Seite eine Verriegelungsöffnung und auf der zweiten Seite ein Federelement vorgesehen sein kann, wobei im verbundenen Zustand das Federelement und die Verriegelungsöffnung zweier Wegplattenstücke zueinander verrastbar ausgebildet sind.

Hierbei können nach einer vorteilhaften Weiterbildung die Wegplattenstücke eine Ober- und eine Unterseite aufweisen, wobei zwischen der Ober- und Unterseite der Profilhohlraum ausgebildet sein kann, wobei zur ersten Seite in der Unterseite die Verriegelungsöffnung vorgesehen sein kann und an der zweiten Seite überstehend das Federelement so ausgebildet sein kann, dass es im verbundenen Zustand der beiden Wegplattenstücke über den Profilhohlraum mit der Verriegelungsöffnung verrastbar ist.

Dabei kann es von Vorteil sein, wenn das oder die Wegplattenstücke aus einem Hohlprofil besteht, wobei mit geeigneter Auswahl bzw. Herstellung des Hohlprofils der Profilhohlraum im Hohlraum des Hohlprofils ausbildbar ist.

Da das Wegplattenelement bzw. die Wegplattenstücke erfindungsgemäß gleichermaßen wie die Befördereinheit zur Aufnahme in die Wegplattenmodule gedacht sind, kann eine Weiterbildung des Wegplattenmoduls bzw. des darin ausgebildeten Streckenbetts darin bestehen, dass im Streckenbett ein Führungsgang zur führenden Aufnahme der Wegplattenstücke als auch zum Führen der Befördereinheit vorgesehen wird.

Der Führungsgang weist dabei einen Führungsboden sowie gegenüberliegende Führungsflanken auf. Die Führungsflanken stehen zum Ausbilden des Führungsgangs vorzugsweise seitlich senkrecht oder in einem Winkel größer 90° zum Führungsboden.

Dabei können im Führungsgang Gleitmittel zum führenden Gleiten der Wegplattenstücke und der Befördereinheit vorgesehen sein.

Als Gleitmittel können an den Führungsflanken Gleitbeläge vorgesehen sein. Sowohl die Wegplattenelement als auch die Befördereinheit können an den Gleitbelägen seitlich entlang gleitend in das Streckenbett bzw. den Führungsgang aufgenommen werden.

Ferner können die Gleitmittel Kugelrollenelemente beinhalten. Die Kugelrollenelemente werden dabei vorzugsweise in dem Führungsboden entlang der Führungsflanken vorgesehen.

Nach einer weiteren Ausführungsform können die Transporthilfsmittel auch Schienenmittel beinhalten.

Dabei können insbesondere komplementär zu den Gleitmitteln am für die Transporthilfsmittel, z.B. dem Wegplattenelement bzw. den Wegplattenstücken und/oder der Befördereinheit Schienenmittel zur geführten Aufnahme im Führungsgang zwischen den Führungsflanken vorgesehen sein.

Ferner können die Schienenmittel der Befördereinheit zum Beispiel Kufenelemente zu und entlang der Führungsflanken aufweisen, wobei die Kufenelemente insbesondere zum Abgleiten entlang der Gleitmittel, d. h. insbesondere zum Abgleiten entlang der Kugelrollenelemente und der Gleitbeläge ausgebildet sind.

Eine Weiterbildung der für die Wegplattenstücke bzw. für das Wegplattenelement vorgesehenen Schienenmittel kann insoweit auch in einem Gleitprofil gesehen werden, welches Gleitprofil zu und entlang der Führungsflanken verläuft.

Dabei kann eine Weiterbildung auch darin bestehen, dass die Gleitprofile eine erste und eine zweite Gleitseite aufweisen, wobei die zweiten Gleitseiten entlang der Führungsflanke verlaufen. Die zweite Gleitseite kann dabei parallel zur Führungsflanke und/oder deren Gleitbelag verlaufen.

Bei dieser Ausführungsform kann dann die erste Gleitseite oberhalb des Führungsgangs flächig auf und entlang eines ersten Streckenbettrandbereichs zur Führungsflanke verlaufen. Je nach Ausrichtung der Führungsflanke kann die erste Gleitseite zur zweiten Gleitseite einen Winkel von 90° oder größer einschließen.

Zu diesem Zweck kann das Streckenbett in Doppelfunktion einen aus Führungsflanken und einem Führungsboden gebildeten Führungsgang zur geführten Aufnahme der Befördereinheit und/oder des Wegplattenelements aufweisen.

Umgekehrt darauf bezogen können Befördereinheit und Wegplattenelement mit Schienenmittel ausgestattet sein, die im Führungsgang zwischen den Führungsflanken geführt aufnehmbar sind.

Da erfindungsgemäß die Wegplattenstücke vorzugsweise gleitend in den Führungsgang eingeschoben werden, kann erfindungsgemäß an einem Wegplattenelement ein Anschlagteil vorgesehen sein. Das Anschlagteil verhindert, dass das Wegplattenstück zu weit in den Führungsgang rutschen kann.

Zudem kann am Anschlagteil ein Griffelement vorgesehen werden, mit dem das Wegplattenstück in oder aus dem Führungsgang schiebbar ist.

Darüber hinaus können am Wegplattenstück Fixierelemente vorgesehen sein, vermittels derer eine Lagefixierung des Wegplattenstücks möglich ist. Diese Fixierelemente können zum Beispiel zwei Steckbolzen umfassen, die unterhalb des Wegplattenstücks angeordnet sind und in Öffnungen im Führungsgang einsteckbar sind.

Des Weiteren besteht eine erfindungsgemäße Weiterbildung auch darin, die Fördereinrichtung dahingehend auszubilden, dass sie eine Transporthalbschale zum Transport von Personen und/oder Gegenständen umfasst. Die Transporthalbschale kann dabei insbesondere so ausgebildet sein, dass darin liegend eine verletzte Person transportierbar ist. Die Transportschale kann dabei z.B. als Rettungsmulde, Rettungswanne oder Korbtrage oder Schleifkorbtrage ausgebildet sein.

Ferner besteht eine erfindungsgemäße Weiterbildung darin, das erfindungsgemäße Stützmodul mit einem Scherenmechanismus derart auszustatten, dass es auf einfache Art und Weise höhenverstellbar die Wegstreckeneinheit bzw. die Wegplattenstücke abstützen kann. Mit dem Scherenmechanismus ist es auf einfache Art und Weise möglich, die Stützwirkung auf unterschiedliche Höhen einzustellen.

Weitere Merkmale, Vorteile, Wirkungen und Einzelheiten ergeben sich aus der nachfolgenden Beschreibung, in der - gegebenenfalls unter Bezug auf eine oder mehrerer Zeichnungen - zumindest ein Ausführungsbeispiel im Einzelnen beschrieben ist. Beschriebene und/oder bildlich dargestellte Merkmale bilden für sich oder in beliebiger, sinnvoller Kombination den Gegenstand, gegebenenfalls auch unabhängig von den Ansprüchen, und können insbesondere zusätzlich auch Gegenstand einer oder mehrerer separater Anmeldung/en sein. Gleiche, ähnliche und/oder funktionsgleiche Teile sind mit gleichen Bezugszeichen versehen.

Dabei zeigen schematisch:
- Fig. 1: eine Übersicht von erfindungsgemäßen Vorrichtungselementen;
- Fig. 2a: eine seitlich perspektivische Unteransicht zweier Wegstreckenmodule getrennt liegend;
- Fig. 2b: eine Seitenansicht der Wegstreckenmodule nach Fig. 2a getrennt liegend;
- Fig. 2c: eine seitliche perspektivische Unteransicht der Wegstreckenmodule nach Fig. 2a auf Stoß liegend;
- Fig. 2d: eine seitliche perspektivische Unteransicht der Wegstreckenmodule nach Fig. 2a auf Stoß liegend und verschraubt;
- Fig. 3: eine seitliche perspektivische Draufsicht eines Wegstreckenmoduls nach Fig. 1;
- Fig. 4a: die Wegplattenstücke aus Fig. 1;
- Fig. 4b: das Detail C aus Fig. 4a im zusammengefügten Zustand
- Fig. 4c: einen Schnitt entlang der Linie A-A aus Fig. 4a;
- Fig. 5: eine perspektivische Sicht auf eine erfindungsgemäße Vorrichtung beim Ein- oder Ausbau von Wegplattenstücken;
- Fig. 6a: eine perspektivische Sicht auf eine erfindungsgemäße Vorrichtung in der Variante mit Wegplattenelement durch zwei Durchgangsöffnungen;
- Fig. 6b: das Detail A aus Fig. 6a;
- Fig. 7: eine Seitenansicht mit eingeschobener Halbschale nach Fig. 8;
- Fig. 8: eine perspektivische Sicht auf eine erfindungsgemäße Vorrichtung in der Variante mit Halbschale durch zwei Durchgangsöffnungen;
- Fig. 9: eine Seitenansicht auf eine erfindungsgemäße Vorrichtung in der Variante nach Fig. 6a.

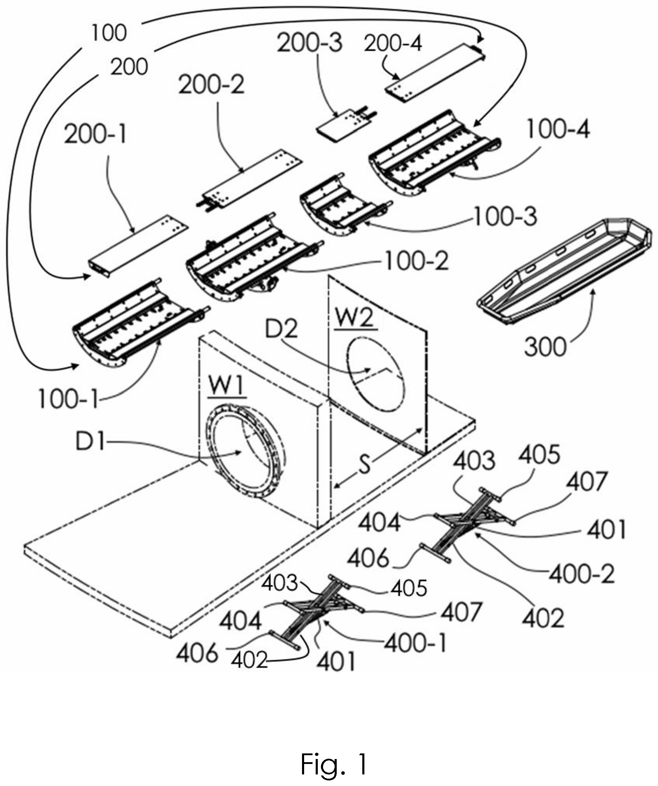

Aus Fig. 1 ist eine Übersicht von Vorrichtungselementen zu entnehmen, welche insbesondere Teil der erfindungsgemäßen Vorrichtung zum Befördern von Sachen und/oder Personen sein können. Bei Fig. 1 handelt es sich um eine seitliche Draufsicht-Perspektive.

Dabei zeigt Fig. 1 eine Ausführungsform der erfindungsgemäßen Wegstreckeneinheit 100, die sich nach der dort dargestellten Ausführungsform aus insgesamt 4 Wegstreckenmodulen 100-1, 100-2, 100-3 und 100-4 zusammensetzt.

Die in Fig. 1 dargestellten Wegstreckenmodule 100-1, 100-2, 100-3 und 100-4 sind jeweils Wegplattenstücke 200-1, 200-2, 200-3 und 200-4 gegenübergestellt bzw. zugeordnet. Die Wegplattenstücke 200-1, 200-2, 200-3 und 200-4 bilden in ihrer Gesamtheit und Verbindung das erfindungsgemäße Wegplattenelement 200 aus.

Aus Fig. 1 ist ferner schematisch die Situation zweier Durchgangsöffnungen D1 und D2 dargestellt, durch die eine erfindungsgemäße Wegstreckeneinheit 100 implementierbar sein kann. Hierbei ist eine definierter Überbrückungsbereich S zwischen den Durchgangsöffnungen D1 und D2 mit der Wegstreckeneinheit 100 zu überbrücken. Die in Fig. 1 diesbezüglich dargestellte Situation kann insbesondere in großen Tankbehältern und sonstigen geschlossenen Industriebauten mit ineinander angeordneten Schutzwänden W1 und W2 vorkommen. Das Innere dieser Bauten, sowohl zwischen den Schutzwänden W1 und W2 als auch hinter der Schutzwand W2, muss über die dargestellten Durchgangsöffnungen D1 und D2 bei Inbetriebnahme, im Revisionsfall oder bei der Reparatur für Personal zugänglich sein.

Bilden die erfindungsgemäßen Wegplattenstücke 200-1, 200-2, 200-3 und 200-4 das erfindungsgemäße Wegplattenelement 200 aus, welches insbesondere für Personen zum Begehen auf der Wegstreckeneinheit 100 vorgesehen ist, so kann die gleichsam aus Fig. 1 zu entnehmende Transporthalbschale 300 bzw. Rettungsmulde anstelle der Wegplattenstücke 200-1, 200-2, 200-3 und 200-4, insbesondere im Rettungsfall, über die Wegstreckeneinheit 100 dem Transport einer aus dem Industrieobjekt oder Industriebehälter zu rettenden Person dienen.

Ferner sind der Fig. 1 zwei Stützmodule 400-1 und 400-2 zu entnehmen, mit denen die erfindungsgemäße Wegstreckeneinheit 100 zur statischen Entlastung/Unterstützung unterabbaubar ist.

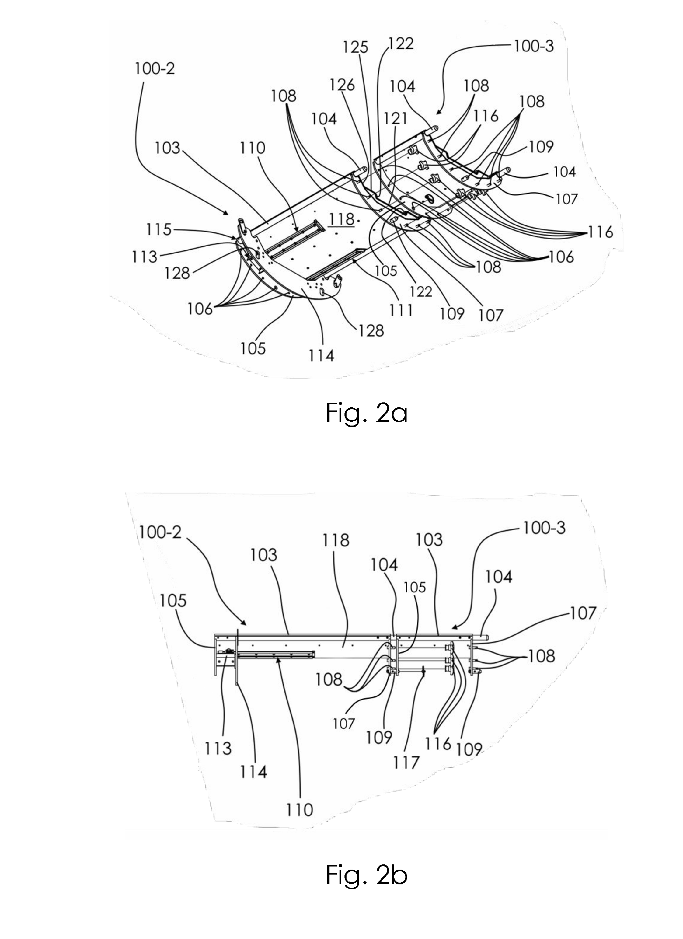

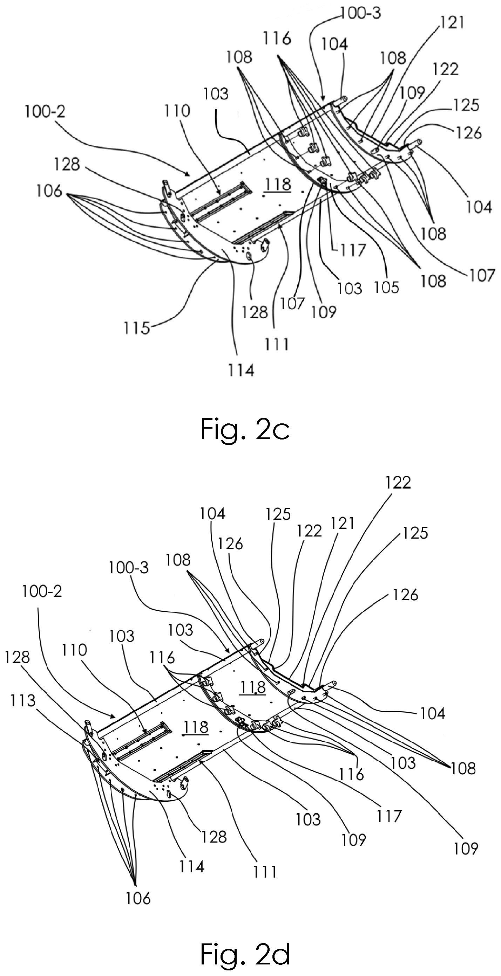

Aus den Fig. 2a bis 2d gehen exemplarisch die zwei Wegstreckenmodule 100-2 und 100-3 aus Fig. 1 sowie deren Zusammenbau zu einem erweiterten Modulelement im Detail hervor. Dabei stellen die Fig. 2a, 2c und 2d die Wegstreckenmodule 100-2 und 100-3 anders als in Fig. 1 von unten dar. Fig. 2b zeigt eine Seitenansicht der beiden Wegstreckenmodule 100-2 und 100-3.

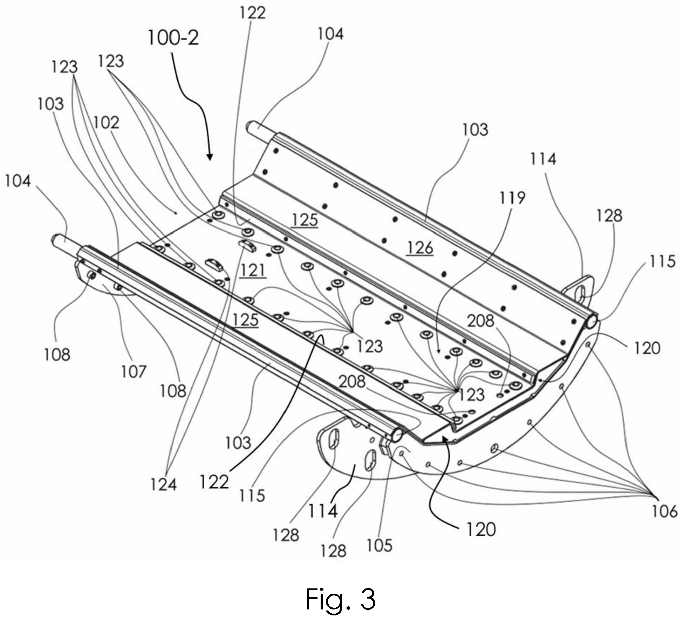

Fig. 2a zeigt mit Blick auf das Wegstreckenmodul 100-2 folgendes: den Streckenbettunterbau 118 des Streckenbetts 102 (siehe beispielsweise Fig. 3), Führungsrohre 103 mit Führungsbolzen 104, dabei sind die Führungsbolzen 104 in den Führungsrohren 103 endseitig befestigt aufgenommen.

Neben dieser Funktion dienen die Führungsrohre 103 auch der statischen Stabilisierung und Versteifung des Wegstreckenmoduls 100-2

Ferner zeigt Fig. 2a eine erste Flanschplatte und eine zweite Flanschplatte des Wegstreckenmoduls 100-2. Die erste Flanschplatte ist als Lochflanschplatte 105 mit Befestigungsöffnungen 106 ausgebildet und die zweite Flanschplatte als Bolzenflanschplatte 107 mit Befestigungsbolzen/Gewindebolzen 108 und einem Führungsbolzen 109.

Entlang des Streckenbettunterbaus 118 des Wegstreckenmoduls 100-2 befinden sich die Schienenpaare 110 und 111. Die Schienenpaare 110 und 111 verlaufen parallel zueinander. Die Schienenpaare 110 und 111 sind am bzw. entlang des Streckenbettunterbaus 118 dem Lochplattenflansch 105 zugewandt angeordnet.

Auf und entlang der Schienenpaare 110 und 111 des Wegstreckenmoduls 100-2 sind Fixierschlitten 113 verschiebbar angeordnet. An den Fixierschlitten 113 befestigt ist eine Schiebeflanschplatte 114, die mit den Fixierschlitten 113 an und entlang des Streckenbettunterbaus 118 verschiebbar ist. Die Schiebeflanschplatte 114 dient der Fixierung der erfindungsgemäßen Wegstreckeneinheit 100 in oder an der Durchgangsöffnungen D1 und/oder D2.

Des Weiteren zeigt Fig. 2a mit Blick auf das Wegstreckenmodul 100-3, dass das Wegstreckenmodul 100-3 nach dieser Ausführungsform gleichsam einen Streckenbettunterbau 118 als Teil des Streckenbetts 102 aufweist und eine Lochflanschplatte 105 mit Befestigungsöffnungen 106 sowie eine Bolzenflanschplatte 107 mit Befestigungsbolzen/Gewindebolzen 108 und einem Führungsbolzen 109 vorgesehen ist. Die Lochflanschplatte 105 dient insbesondere der Befestigung mit dem Wegstreckenmodule 100-2.

Ferner und gleichsam sind am Wegstreckenmodul 100-3 Führungsbolzen 104 auf Höhe der Bolzenflanschplatte 107 zu sehen, die endseitig, so wie beim Wegstreckenmodul 100-2, in den Führungsrohren 103 eingesteckt befestigt ausgebildet sind, wobei zudem gegenüberliegende Führungsöffnungen 115 an den Führungsrohren 103 des Wegstreckenmoduls 100-3 andeutungsweise zu erkennen sind, auf die die Führungsbolzen 104 des Wegstreckenmoduls 100-2 nach Fig. 2a ausgerichtet zu sehen sind.

Fig. 2b stellte die Wegstreckenmodule 100-2 und 100-3 beim Zusammenbau in Seitenansicht dar.

Dabei werden zunächst die Führungsbolzen 104 in die Führungsöffnungen 115 der Führungsrohre 103 geschoben. Gleiches gilt für den Führungsbolzen 109 an der Bolzenflanschplatte 107, der in eine zentrale Befestigungsöffnung 106 der Lochflanschplatte 105 vom Wegstreckenmodul 100-3 eingeführt wird. Sowohl Führungsbolzen 109 als auch die zentrale Befestigungsöffnungen 106 liegen in Achsensymmetrie zur Querseite des Wegstreckenmoduls 100-2 oder 100-3

Aus Fig. 2b, gleichsam zu Fig. 2a, sind die Kreuzgriffmuttern 116 zu erkennen, mit denen die als Gewindebolzen ausgeführten Befestigungsbolzen 108 des Wegstreckenmoduls 100-2 zur Fixierung der beiden Wegstreckenmodule 100-2 und 100-3 verschraubt werden, wobei zuvor die Befestigungsbolzen 108 der Bolzenflanschplatte 107 des Wegstreckenmoduls 100-2 durch die Befestigungsöffnungen 106 der Lochflanschplatte 105 des Wegstreckenmoduls 100-3 gesteckt werden, und zwar bis zum Anschlag zwischen Lochflanschplatte 105 und Bolzenflanschplatte 107. Analog kann der Ausbau mit den weiteren Wegstreckenmodulen 100-1 und 100-4 zur avisierten Wegstreckeneinheit 100 erfolgen.

In Fig. 2c ist die Situation dargestellt, in der die Bolzenflanschplatte 107 des Wegstreckenmoduls 100-2 bereits in Anschlag zur Lochflanschplatte 105 des Wegstreckenmoduls 100-3 liegt. In diesem Stadium des Zusammenbaus können die Kreuzgriffmuttern 116 auf die Befestigungsbolzen bzw. Gewindebolzen 108 geschraubt werden, um die beiden Wegstreckenmodule 100-2 und 100-3 zueinander zu fixieren bzw. zu befestigen.

Entgegen der Gewindebolzen 108 wird nach der Ausführungsform gemäß der Fig. 2a bis 2d der Führungsbolzen 109 nicht mit einer Mutter verschraubt, sondern mit einem Stecker 117 bzw. Klappstecker, der in einer Queröffnung im Führungsbolzen 109 steckt, gesichert.

Insbesondere die mit den Führungsrohren 103 in Verbindung stehenden Führungsbolzen 104 dienen nicht nur der Führung und damit dem einfachen Zusammenbau zweier Wegstreckenmodule 100-2 und 100-3, sondern sind auch maßgeblich dafür, dass die Verbindung zwischen zwei Wegstreckenmodulen 100-2 und 100-3, d.h. die Wegstreckeneinheit 100, die erforderlichen Begehungs- oder Beförderungslasten tragen kann.

Fig. 2d zeigt ergänzend zu den Fig. 2a bis 2c die beiden Wegstreckenmodule im durch die Kreuzgriffmuttern 116 verschraubten Zustand.

Fig. 3 zeigt beispielhaft für die erfindungsgemäßen Wegstreckenmodule das Wegstreckenmodul 100-2 aus den Fig. 2a bis 2d sowie Fig. 1. Fig. 3 zeigt dazu eine seitlich-perspektivische Draufsicht.

Dort ist unter anderem das Streckenbett 102 des Wegstreckenmoduls 100-2 zu erkennen. Das Streckenbett 102 beinhaltet insbesondere den Führungsgang 119. Der Führungsgang 119 wird gebildet von Führungsflanken 120 und dem Führungsboden 121. An den Führungsflanken 120 sind Gleitbeläge 122 angeordnet bzw. angebracht. Ferner befinden sich entlang des Führungsbodens 121 Kugelrollenelemente 123.

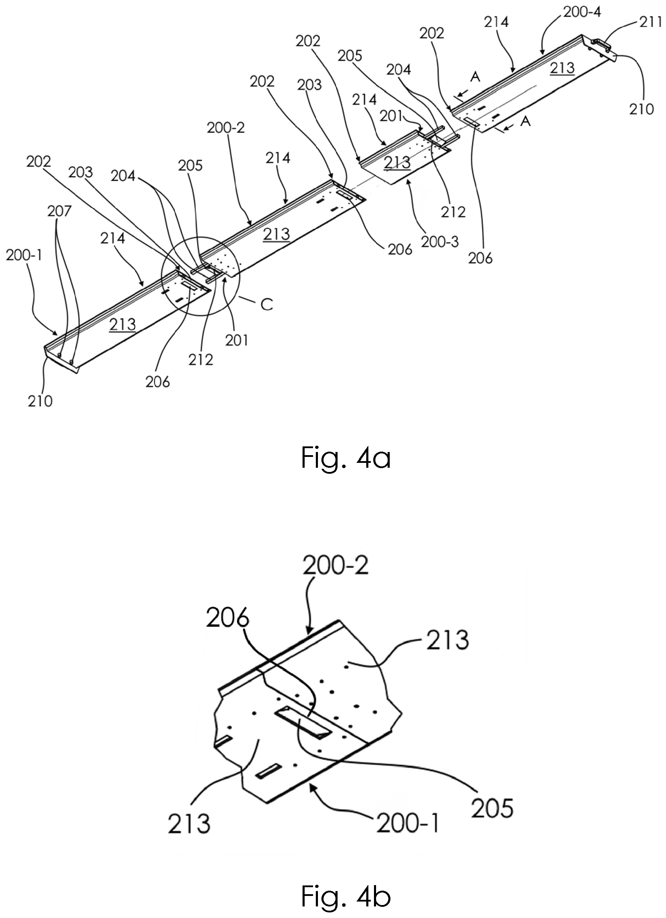

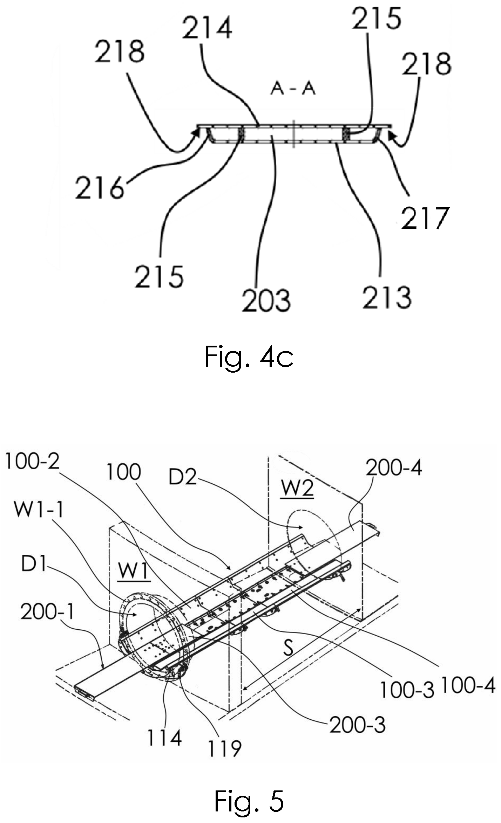

Die Funktion der Gleitbeläge 122 besteht insbesondere darin, eine seitliche gleitende Leitführung für sowohl die Wegplattenstücke 200-1 bis 200-4 (Fig. 4a) als auch für Transporthalbschale 300 (Fig 4c) zu schaffen.

Die Kugelrollenelemente 123 dienen dabei insbesondere der verbesserten Gleit- oder Abrollfähigkeit der Transporthalbschale 300, wenn mit der Transporthalbschale 300 zum Beispiel eine Person über die Wegstreckeneinheit 100 befördert werden soll.

Des Weiteren sind auf dem Führungsboden 121 Keile 124 zu erkennen. Sie dienen insbesondere der seitlichen Führung der Wegplattenstücke 200-1 bis 200-4 im eingebauten Zustand.

Zur Ausbildung des Streckenbetts 102 fügen sich an die Führungsflanken 120 ein erster Streckenbettrandbereiche 125 an. Auf die ersten Streckenbettrandbereiche 125 folgen zweite Streckenbettrandbereiche 126. Auf der gegenüberliegenden Seite des Führungsgangs 119 verhält es sich entsprechend.

Die ersten Streckenbettrandbereiche 125 verlaufen im Wesentlichen horizontal. Im Verhältnis zu den zweiten Streckenbettrandbereichen 126 nehmen die ersten Streckenbettrandbereichen 125 einen Winkel größer 90° ein. Entsprechendes gilt auch für die Führungsflanken 120 zum Führungsboden 121 im Führungsgang 119.

Das Streckenbett 102 bildet ausgehend vom Führungsboden 121 über den ersten Streckenbettrandbereich 125 und den zweiten Streckenbettrandbereich 126 in Stufen eine Kreissegment-Form aus.

Dies bildet sich in entsprechender Weise ab auf den Streckenbettunterbau 118, der auch eine Stufensegmentform aufweist, als auch auf die Schiebeflanschplatte 114, die Lochflanschplatte 105 und die Bolzenflanschplatte 107, die kreissegmentförmig ausgebildet sind. Die Segmentform hat strukturelle Versteifungsvorteile.

Entlang bzw. oberhalb des zweiten Streckenbettrandbereiche 126 verlaufen die Führungsrohre 103. Die Führungsrohre 103 dienen der Stabilisierung und Versteifung des Streckenbettaufbaus. Ferner können an den Führungsrohren 103, wie bereits ausgeführt, die Führungsbolzen 104 befestigt sein und gleichzeitig gegenüberliegend können die Führungsrohre 103 Führungsöffnungen 115 ausbilden, in die beim Zusammenbau die Führungsbolzen 104 eingesetzt/eingesteckt werden können.

Des Weiteren ist nach Fig. 3 die Schiebeflanschplatte 114 zu erkennen. Die Schiebeflanschplatte 114 weist Befestigungsöffnungen 128 auf. Die Befestigungsöffnungen 128 sind als flexible Befestigungsmöglichkeit entlang der Durchgangsöffnungen D1 und D2 als Langlöcher ausgestaltet.

Fig. 4a entspricht in ihrem Übersichtscharakter Fig. 1, wobei aus Fig. 4a nur die zu einem Wegplattenelement 200 zusammenzufügenden Wegplattenstücke 200-1 bis 200-4 zu entnehmen sind. Ferner besteht ein Unterschied zu Fig.1 darin, dass die Wegplattenstücke 200-1 bis 200-4 von unten dargestellt sind.

Die Wegplattenstücke 200-1 bis 200-4 sind als Hohlprofil ausgebildet. Sie weisen jeweils eine erste und eine zweite Seite 201 und 202 auf. Dabei weisen die Wegplattenstücke 200-1 bis 200-4 auf den jeweiligen zweiten Seiten 202 Stecköffnungen 203 auf.

Mit Blick auf die dort dargestellten Wegplattenstücke 200-2 und 200-3 sind an deren ersten Seiten 201 Steckelemente in Form von Steckbolzen 204 vorgesehen. Darüber hinaus befinden sich auf diesen ersten Seiten 201 jeweils Federelement 205. Die Federelemente 205 erstrecken sich zwischen den Steckbolzen 204. Die Federelemente 205 können als gebogene Federbleche ausgebildet sein.

Das Federelement 205 mit dem Steckbolzen 204 bildet auf der ersten Seite 201 des Wegplattenstücks 200-2 eine der Verbindungsseiten des erfindungsgemäßen Steckmechanismus zwischen den Wegplattenstücken 200-1 und 200-2 sowie den Wegplattenstücken 200-3 und 200-4 aus.

In seiner Ausbildung als Federblech kann das Federelement 205, so wie in Fig. 4a dargestellt, zum Beispiel gebogen ein V-Knick-Profil aufweisen, d. h. der V-Knick 212 des Federblechs verläuft gleichsam zwischen den Steckbolzen 204, dabei weist der V-Knick 212, d. h. die spitz zulaufende Seite des Federblechs, in Richtung Unterseite 213 des Wegplattenstücks 200-2 und 200-3.

Die Stecköffnungen 203 der Wegplattenstücke 200-1 und 200-4 sind nach Fig. 4a gegenüber den Federelementen 205 und Steckbolzen 204 der Wegplattenstücke 200-2 und 200-3 angeordnet. Die Stecköffnungen 203 der Wegplattenstücke 200-1 und 200-4 sind so ausgebildet, dass die Steckbolzen 204 zum paarweisen Verbinden der Wegplattenstücke 200-1 und 200-2 sowie der Wegplattenstücke 200-3 und 200-4 bündig in die Stecköffnungen 203 eingeführt/aufgenommen werden können. Der V-Knick 212 liegt dabei jeweils vorzugsweise zumindest, wenn nicht darüber hinaus, auf Höhe der Unterseite 213 der Wegplattenstücke 200-2 und 200-3.

Im Falle der Wegplattenstücke 200-1, 200-2 sowie 200-4 befindet sich auf der Seite der Stecköffnung 203 (zweite Seite 202) benachbart zur Stecköffnung 203 als Aussparung in der Unterseite 213 jeweils eine Verriegelungsöffnung 206.

Die Verriegelungsöffnung 206 erzeugt eine Öffnung in das Innere des Hohlprofils der Wegplattenstücke 200-1, 200-2 sowie 200-4. Die Verriegelungsöffnung 206 ist, insbesondere nach ihrer Breite, bezogen auf die Querseite der Wegplattenstücke 200-1, 200-2 sowie 200-4, und ihrer Tiefe, bezogen auf die Längsseite des Wegplattenstücke 200-1, 200-2 sowie 200-4, so gestaltet, dass das V-Knick-Profil des Federelements 205 bündig und dabei gegebenenfalls verklemmend in die Verriegelungsöffnung 206 aufnehmbar ist.

Die Funktion des erfindungsgemäßen Steckmechanismus zeichnet sich dabei insbesondere dadurch aus, dass beim Verschließen zum einen die Steckbolzen 204 in die Stecköffnung 203 eingeführt werden, wobei beim Einführen das Federelement 205 an der Unterseite 213 des Wegplattenstücks 200-2 bzw. dessen Hohlprofilunterseite anstößt und nach oben zurückweicht, wobei das Federelement 205 gleichsam in die Stecköffnung 203 eingeführt wird und auf Höhe der Verriegelungsöffnung 206 mit der Verriegelungsöffnung 206 verrastet, in dem das Federelement 205 aufgrund seiner federnden bzw. rückfedernden Eigenschaft mit seinem V-Knick 212 bzw. V Profil in die Verriegelungsöffnung 206 bündig gedrückt wird. Dabei geht mit dem V-Profil des Federelements 205 der Vorteil einher, dass das Federelement 205 in die Verriegelungsöffnung 206 eingedrückt bzw. eingeklemmt werden kann.

In diesem verbundenen Zustand (siehe Fig. 4b) zwischen dem Wegplattenstücke 200-1 und 200-2 sowie 200-3 und 200-4 liegt die erste Seite 201 auf Stoß mit der zweiten Seite 202.

Mit dem erfindungsgemäßen Steckmechanismus können prinzipiell beliebig viele Wegplattenstücke 200-1 bis 200-4 miteinander zu einem Wegplattenelement 200 verbunden werden, wobei die Verbindung außerhalb oder beim Einschieben der Wegplattenstücke 200-1 bis 200-4 in das Streckenbett 102 erfolgen kann und wobei, wie auch nach der Ausführungsform gemäß Fig. 1 und 4a vorgesehen, nicht alle Wegplattenstücke 200-1 bis 200-4 mit dem Steckmechanismus in Verbindung stehen müssen.

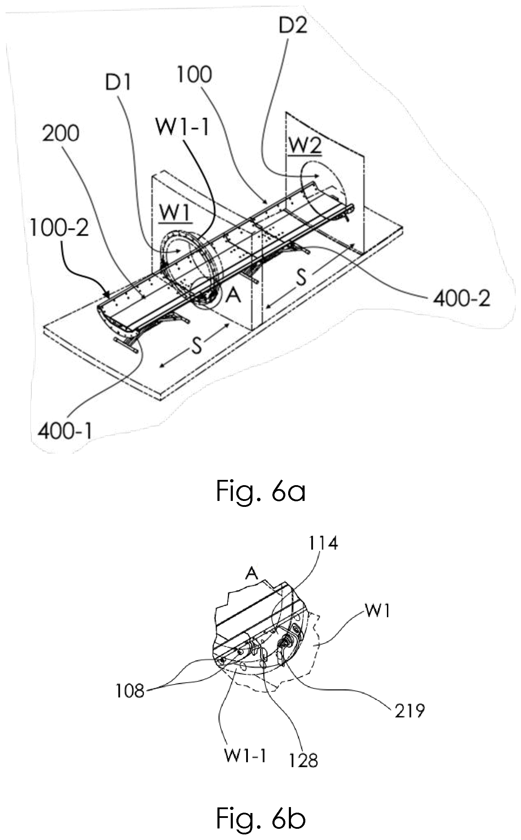

Nach der Ausführungsform gemäß Fig. 1 und 4a werden jeweils außerhalb die Wegplattenstücke 200-2 und 200-1 sowie 200-4 und 200-3 paarweise zunächst mit dem erfindungsgemäßen Steckmechanismus zu Wegplattenteilelementen verbunden, um dann an gegenüberliegenden Seiten der Wegstreckeneinheit 100 seitlich in das Streckenbett 102 der Wegstreckeneinheit 100 zum Ausbilden des vollständigen Wegplattenelements 200 in der Wegstreckeneinheit 100 eingeschoben zu werden (siehe hierzu insbesondere auch Fig. 5). Im eingeschobenen Zustand liegen dann die zweiten Seiten 202 der Wegplattenstücke 200-2 und 200-3 bündig auf Stoß zueinander (siehe auch Fig. 6a).

Damit die Wegplattenstücke 200-1 bis 200-4 bzw. die Wegplattenteilelemente in das Streckenbett 102 eingeschoben werden können, weisen die Wegplattenstücke 200-1 bis 200-4 entlang ihrer Längsseiten ein an die Stufen zwischen Führungsboden 121, den Führungsflanken 120 bzw. den Gleitbelägen 122 sowie den ersten Streckenbettrandbereichen 125 angepassten Gleitprofil auf.

Hierzu ist aus Fig. 4c ein Schnitt durch das Wegplattenstück 200-4 aus Fig. 4a entlang der Linie A-A zu entnehmen. Das jeweilige Gleitprofil ist dort links und rechts am Rand des Wegplattenstücks 200-4 zu sehen.

Das Hohlprofil des Wegplattenstücks 200-4 besteht aus der Unterseite 213 unter der Oberseite 214. Zwischen Unterseite 213 und Oberseite 214 ist der Stecköffnungsbereich der Stecköffnung 203 vorgesehen. Zwischen Oberseite 214 und Unterseite 213 sind Distanzelemente 215 vorgesehen, die auch die Stecköffnung 203 seitlich eingrenzen.

Ausgehend von der Unterseite 213 erstrecken sich an den Rändern des Wegplattenstücks 200-4 die Gleitseiten 216 und 217 (erste und zweite Gleitfläche bzw. Gleitseite 216 und 217). Die erste und zweite Gleitseite 216 und 217 schließen mit der Unterseite 213 einen Winkel größer 90° ein. An die erste und zweite Gleitseite 216 und 217 schließt sich jeweils eine Auflagefläche 218 an. Im eingeschobenen Zustand des Wegplattenstücks 200-4 liegt die Auflagefläche 218 gleitend auf einem der ersten Streckenbettrandbereichen 125.

Aus Fig. 5 ist dazu noch insbesondere zusätzlich zu entnehmen, dass beim Aufbau z.B. auch eine Variante mit insgesamte drei Wegstreckenmodulen, nämlichen den Wegstreckenmodulen 100-2, 100-3 und 100-4 (siehe u.a. auch Fig. 1) und komplementär dazu die Wegstreckenstücke 200-1-, 200-2 und 200-4) zur erfindungsgemäßen Vorrichtung zunächst vorzugsweise die Wegstreckeneinheit 100 zwischen den Durchgangsöffnungen D1 und D2 vorsehbar bzw. aufbaubar ist. Erst im Anschluss daran werden die Wegplattenteilelemente seitlich in das Streckenbett 102 eingeschoben oder wieder entnommen.

Das Wegplattenelement 200 wird dabei durch Fixierelemente in Form von Sicherungsstifte 207 so gesichert, dass die Wegplattenteilelemente des Wegplattenelements 200 nicht seitlich aus dem Streckenbett 102 rutschen können.

Die Sicherungsstifte 207 verzahnen sich dabei als Teil des Fixiermechanismus mit im Führungsboden 121 ausgebildeten Sicherungslöcher 208 (siehe Fig. 3), in die die vertikal zur begehbaren Oberseite der Wegplattenstücke 200-1 bis 200-4 ausgerichteten Sicherungen eingreifen. Die Sicherungslöcher 208 sind dabei vorzugsweise, aber nicht zwingen, an beiden Enden der Wegstreckeneinheit 100 vorgesehen. Die Sicherungslöcher 208 sind daher nach der Ausführungsform gemäß z.B. Fig. 1 an den freien Enden - und dort querseitig - der Wegstreckenmodule 100-2 und 100-4 vorgesehen.

Entsprechend sind die Sicherungsstifte 207 auf der Unterseite 213 der Wegplattenstücke 200-1 und 200-4, und zwar entsprechend entlang der Querseiten der freien Enden der Wegplattenstücke 200-1 und 200-4 bzw. deren zweiten Seiten 202 und im eingesetzten Zustand der Wegplattenstücke 200-1 und 200-4 zu den Sicherungslöcher 208 (siehe auch Fig. 3) gegenüberliegend.

In Nachbarschaft zu den Sicherungsstiften 207, d. h. bei bzw. querseitig entlang der freien Enden des Wegplattenelements 200 bzw. der Wegplattenstücke 200-1 und 200-4, befinden sich nach der Ausführungsform gemäß z.B. Fig. 1 und Fig. 4a Anschlagteile in Form von Anschlagblechen 210, die im eingesetzten Zustand der Wegplattenstücke 200-1 und 200-4 bündig an den Endseiten (zweiten Seiten 202) der Wegstreckenmodule 100-1 und 100-4 anschließen.

Dabei können die Anschlagbleche 210 auch dazu dienen, dass an ihnen Griffelemente 211 befestigt werden können, an denen die Wegplattenstücke 200-1 bis 200-4 aus dem und/oder in das Streckenbett 102 der Wegstreckeneinheit 100 gezogen oder geschoben und/oder gehoben werden können.

In Fig. 6a ist die mit einem Wegplattenelement 200 und damit die begehbare Variante der erfindungsgemäßen Vorrichtung zu entnehmen mit den Wegstreckenmodulen 100-1 bis 100-4 und den Wegplattenstücken 200-1 bis 200-4. Wie auch schon gemäß Fig. 5, erstreckt sich diese Variante zwischen den Schutzwänden W1 und W2 bzw. den Durchgangsöffnungen D1 und D2. Es sollen die Überbrückungsbereiche S überbrückt werden.

Zur Unterstützung der erfindungsgemäßen Vorrichtung bzw. der Wegstreckenmodule 100-1 bis 100-4 sind die bereits zu Fig.1 erwähnten Stützmodule 400-1 und 400-2 unterhalb der Wegstreckeneinheit 100 angeordnet.

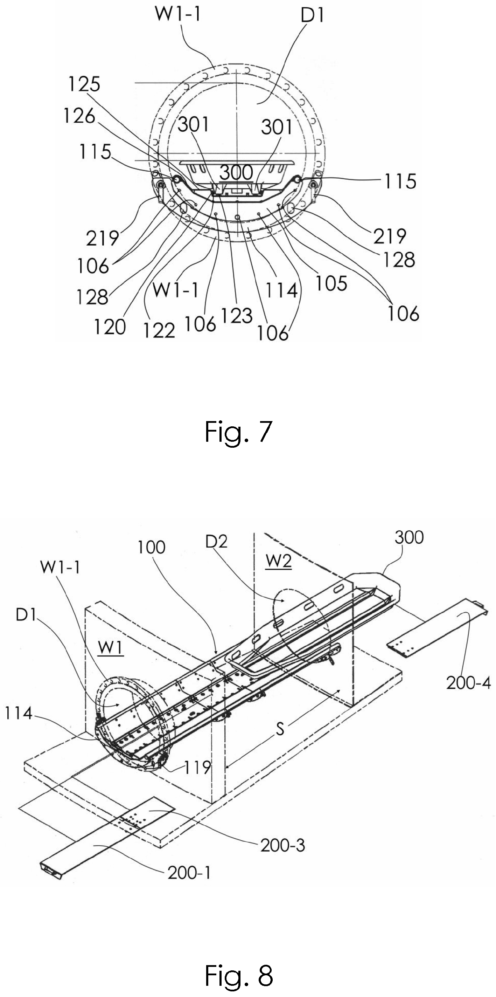

Das bereits insbesondere zu Fig. 2a beschriebene Wegstreckenmodule 100-2 liegt dabei so in der Durchgangsöffnung D1, dass die Schiebeflanschplatte 114 vermittels des Fixierschlittens 113 zum Öffnungsrand der Durchgangsöffnung D1 verschoben werden kann. Die Schiebeflanschplatte 114 liegt dort am Öffnungsrand an. Dabei ist am Öffnungsrand zur Schiebeflanschplatte 114 der Gegenflansch W1-1 vorgesehen, mithilfe dessen die Wegstreckeneinheit 100 zur Durchgangsöffnung D1 hin fixiert bzw. befestigt bzw. verschraubt werden kann (siehe hierzu auch Detail A in Fig. 6b sowie Fig. 7). Aus Fig. 6b geht hierzu zum Beispiel ein Excenterspanner 219 hervor.

Der Excenterspanner 219, der Gegenflansch W1-1 und die Schiebeflanschplatte 114 sind u.a. auch aus Fig. 7 zu entnehmen. Die Excenterspanner 219 sind dort über die oberen Befestigungsöffnungen 128 mit dem Gegenflansch W1-1 verbunden. Dabei wird aus Fig. 7 deutlich, dass im Falle einer kleineren Durchgangsöffnung D1 oder D2 die unteren Langlöcher bzw. unteren Befestigungsöffnungen 128 für gegebenenfalls Durchgangsöffnungen D1 oder D2 mit geringerem Durchmesser als die Ausführungsform nach Fig. 7, die eine Durchgangsöffnung D1 oder D2 mit ca. 1 m Durchmesser repräsentiert, vorgesehen sind.

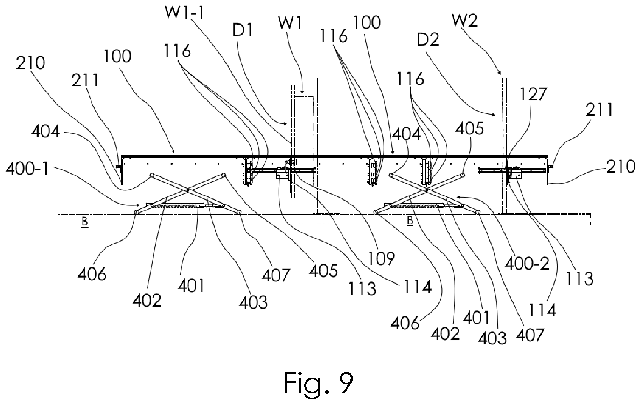

Eine Alternative zur Ausführung bzw. der Verwendung der Schiebeflanschplatte 114 als Fixierflansch kann erfindungsgemäß auch darin bestehen, wenn an und entlang der Schiebeflanschplatte 114 und dabei in den Befestigungsöffnungen 128 parallel zur Innenseite der Durchgangsöffnung D1 verlaufende Auflagebolzen 127 zur Ausbildung eines erfindungsgemäßen Auflageflansches vorgesehen bzw. befestigt werden, welche dann auf der Innenseite der Durchgangsöffnung D1 oder der Durchgangsöffnung D2 (siehe insbesondere Fig. 9)aufliegen können. Mit der durch die Auflagebolzen 127 geschaffenen Auflage, kann gleichsam eine stabile Lage in den Durchgangsöffnungen erreicht werden.

In Ergänzung zur Ausführungsform nach Fig. 5, aber auch natürlich mit Blick auf sämtliche anderen Ausführungsform, kann aus Fig. 8 noch die Situation entnommen werden, in der die Transporthalbschale 300 auf der erfindungsgemäßen Wegstreckeneinheit 100 durch die Durchgangsöffnung D2 geschoben wird.

Die Transporthalbschale 300 weist dabei Gleitkufen 301 auf, die im Streckenbett 102 bzw. im Führungsgang 119 zwischen den Führungsflanken 120 bzw. den Gleitbelägen 122 auf den im Führungsboden 121 vorgesehenen Kugelrollenelemente 123 geführt entlang gleiten (siehe hierzu insbesondere auch Fig. 7).

Darüber hinaus zeigt Fig. 9 die erfindungsgemäße Vorrichtung aus Fig. 6a einschließlich der Stützmodule 400-1 und 400-2 in einer Seitenansicht. Aus dieser Seitenansicht wird nochmals deutlich erkennbar, wie die Stützmodule 400-1 und 400-2 die erfindungsgemäße Wegstreckeneinheit 100 unterbauen und dabei abstützen.

Die Stützmodule 400-1 und 400-2 weisen hierzu einen Scherenmechanismus auf, mit dem die Stützmodule 400-1, 400-2 situationsgemäß auf unterschiedliche Höhen angepasst werden können. Dabei ist eine Zahnstange 401 mit einer Schrägverzahnung vorgesehen, mit der der Scherenmechanismus auf die zu wählende Stützhöhe festgestellt werden kann. Die Zahnstange 401 verläuft dabei zwischen und in der Mitte, d.h. zwischen den beiden Paarstrebenschenkel 402 und 403 des Scherenmechanismus bzw. Stützmodule 400-1, 400-2. Des Weiteren weisen die Stützmodule 400-1, 400-2 zur Auflage der Wegstreckeneinheit 100 und zur Maximierung der Stützstabilität quer zur Wegstreckeneinheit 100 verlaufende Stützstreben 404 und 405 sowie auf dem Boden stehende, quer verlaufende Fußstreben 406 und 407 auf.

Das oben beschriebene Ausführungsbeispiel kann insbesondere mit Blick auf Tanks/Silos mit Mantelmannloch von DN600-DN 1000 oder auf Tanks mit Auffangtasse und zwei Mannlöchern DN600-DN1000 verstanden werden. Dabei sind Tanks mit Auffangtasse solche Tanks, die eine Auffangtasse aufweisen. Eine Auffangtasse ist eine Art Sicherheitswanne, die dazu dient, aus einem Tank austretende Flüssigkeiten aufzufangen. Diese Art der Tanks sind über Mannlöcher im Bereich DN600-DN1000 zugänglich, wobei die Bezeichnung DN600 bis DIN1000 für einen Nennweitendurchmesser in Millimeter steht, d.h. vorliegend für einen Durchmesser zwischen 600 mm und 1000 mm

Ferner und desweiter auch nur beispielhaft liegen Anwendung auch bei Brückenhohlkästen mit Bodenschwellen in Inneren im Abstand von 200 mm bis 120 0mm und Schächte mit bodennahen Rohrleitungen von 200 mm bis 1200 mm.

Es versteht sich, dass die obige detaillierte Beschreibung und die Zeichnungen zwar bestimmte exemplarische Ausgestaltungen der Erfindung darstellen, dass sie aber nur zur Veranschaulichung gedacht sind und nicht als den Umfang der Erfindung einschränkend ausgelegt werden sollen. Diverse Abwandlungen der beschriebenen Ausgestaltungen sind möglich, ohne den Rahmen der nachfolgenden Ansprüche und deren Äquivalenzbereich zu verlassen. Insbesondere gehen aus dieser Beschreibung und den Fig. auch Merkmale der Ausführungsbeispiele hervor, die nicht in den Ansprüchen erwähnt sind. Solche Merkmale können auch in anderen als den hier spezifisch offenbarten Kombinationen auftreten. Die Tatsache, dass mehrere solche Merkmale in einem gleichen Satz oder in einer anderen Art von Textzusammenhang miteinander erwähnt sind, rechtfertigt daher nicht den Schluss, dass sie nur in der spezifisch offenbarten Kombination auftreten können; stattdessen ist grundsätzlich davon auszugehen, dass von mehreren solchen Merkmalen auch einzelne weggelassen oder abgewandelt werden können, sofern dies die Funktionsfähigkeit der Erfindung nicht in Frage stellt.

Für die gesamte Beschreibung und die Ansprüche gilt, dass der Ausdruck "ein" als unbestimmter Artikel benutzt wird und die Anzahl von Teilen nicht auf ein einziges beschränkt. Sollte "ein" die Bedeutung von "nur ein" haben, so ist dies für den Fachmann aus dem Kontext zu verstehen oder wird durch die Verwendung geeigneter Ausdrücke wie zum Beispiel "ein einziger" eineindeutig offenbart.

### Bezugszeichenliste

- 100: Wegstreckeneinheit
- 100-1: Wegstreckenmodul
- 100-2: Wegstreckenmodul
- 100-3: Wegstreckenmodul
- 100-4: Wegstreckenmodul
- 102: Streckenbett
- 103: Führungsrohre
- 104: Führungsbolzen
- 105: Lochflanschplatte
- 106: Befestigungsöffnungen
- 107: Bolzenflanschplatte
- 108: Befestigungsbolzen
- 109: Führungsbolzen
- 110: 1. Schienenpaar
- 111: 2. Schienenpaar
- 113: Fixierschlitten
- 114: Schiebeflanschplatte
- 115: Führungsöffnungen
- 116: Kreuzgriffmuttern
- 117: Stecker
- 118: Streckenbettunterbau
- 119: Führungsgang
- 120: Führungsflanken
- 121: Führungsboden
- 122: Gleitbeläge
- 123: Kugelrollenelemente
- 124: Keile
- 125: erste Streckenbettrandbereiche
- 126: zweite Streckenbettrandbereiche
- 127: Auflagebolzen
- 128: Befestigungsöffnungen
- 200: Wegplattenelement
- 200-1: Wegplattenstück
- 200-2: Wegplattenstück
- 200-3: Wegplattenstück
- 200-4: Wegplattenstück
- 201: erste Seite
- 202: zweite Seite
- 203: Stecköffnung
- 204: Steckbolzen
- 205: Federelement
- 206: Verriegelungsöffnung
- 207: Sicherungsstifte
- 208: Sicherungslöcher
- 210: Anschlagbleche
- 211: Griffelemente
- 212: V-Knick
- 213: Unterseite der Wegplattenstücke 200-1 bis 200-4
- 214: Oberseite der Wegplattenstücke 200-1 bis 200-4
- 215: Distanzelemente
- 216: erste Gleitseite/Gleitfläche
- 217: zweite Gleitseite/Gleitfläche
- 218: Auflagefläche
- 219: Exzenterspanner
- 300: Transporthalbschale
- 301: Gleitkufen
- 400-1: Stützmodul
- 400-2: Stützmodul
- 401: Zahnstange
- 402: erster Schenkel des Scherenmechanismus
- 403: zweiter Schenkel des Scherenmechanismus
- 404: Stützstreben
- 405: Stützstreben
- 406: Fußstreben
- 407: Fußstreben
- A: Detail
- A-A: Schnitt
- B: Boden/Standfläche
- C: Detail
- D1: Durchgangsöffnung
- D2: Durchgangsöffnung
- S: Überbrückungsbereich
- W1: Schutzwand
- W1-1: Gegenflansch
- W2: Schutzwand

## Patentansprüche

1. Vorrichtung zum Befördern von Objekten (Tiere, Personen und/oder Sachen) entlang einer Beförderungsstrecke über zumindest einen Überbrückungsbereich (S) umfassend eine Wegstreckeneinheit (100) zum flexiblen Bereitstellen der Beförderungsstrecke, wobei die Wegstreckeneinheit (100) ein oder mehrere Wegstreckenmodule (100-1; 100-2; 100-3; 100-4) aufweist, wobei das oder die Wegstreckmodule (100-1; 100-2; 100-3; 100-4) Flanschmittel derart aufweisen, dass die Wegstreckeneinheit (100) ausgehend von einem ersten Wegstreckenmodule (100-1; 100-2; 100-3; 100-4) mit ein oder mehreren weiteren Wegstreckenmodulen (100-1; 100-2; 100-3; 100-4) flexibel auf unterschiedliche Beförderungsstrecken ausbaubar ist und so flexibel umrüstbar ausgebildet ist, dass die Beförderbarkeit der Objekte über die Wegstreckeneinheit mit oder ohne Unterstützung durch Transporthilfsmitteln ausbildbar ist.

2. Vorrichtung nach Anspruch 1, wobei die Beförderungsstrecke durch zumindest eine Durchgangsöffnung (D1; D2) mit erschwerter Personenzugänglichkeit erfolgt.

3. Vorrichtung nach Anspruch 1 und/oder 2, wobei zum Abstützen der Wegstreckenmodule (100-1; 100-2; 100-3; 100-4) Stützmodule (400-1; 400-2) unterbauend vorsehbar sind.

4. Vorrichtung nach einem oder mehreren der vorhergehenden Ansprüche, wobei die Flanschmittel Führungskomponenten und/oder Fixierkomponenten umfasst.

5. Vorrichtung nach Anspruch 4, wobei die Führungskomponenten Führungsbolzen (104) und Führungsöffnungen (109) aufweisen.

6. Vorrichtung nach Anspruch 4 oder 5, wobei die Fixierkomponenten Flanschplatten beinhalten, wobei die Flanschplatten eine Bolzenflanschplatte (105) und Lochflanschplatte (107) umfassen.

7. Vorrichtung nach Anspruch 6, wobei die Bolzenflanschplatte (105) mit Befestigungsbolzen (108) ausgestattet ist, welche zum Verschrauben mit und an der Lochflanschplatte (107) vorgesehenen Befestigungsöffnungen (106) ausgebildet sind.

8. Vorrichtung nach einem oder mehreren der vorhergehenden Ansprüche, wobei die Flanschmittel zumindest einen Fixiermechanismus zum Stabilisieren und/oder Befestigen der Wegstreckeneinheit (100) in der Durchgangsöffnung (D1; D2) aufweist.

9. Vorrichtung nach Anspruch 8, wobei der Fixiermechanismus einen Fixierflansch und einen Fixierschlitten (113) umfasst, wobei der Fixierflansch am Fixierschlitten (113) und der Fixierschlitten (113) an der Wegstreckeneinheit (100) verschiebbar angeordnet ist.

10. Vorrichtung nach Anspruch 9, wobei der Fixierflansch als Flanschplatte (114) zur Anlage und Befestigung der Wegstreckeneinheit (100) entlang der Durchgangsöffnung (D1; D2) und/oder als Auflageflansch zum Stabilisieren und Auflegen der Wegstreckeneinheit (100) in der Durchgangsöffnung (D1; D2) ausbildbar ist.

11. Vorrichtung nach Anspruch 10, wobei der Auflageflansch Auflagebolzen (127) zum Auflegen der Wegstreckeneinheit (100) in der Durchgangsöffnung (D1; D2) aufweist.

12. Vorrichtung nach einem oder mehreren der Ansprüche 8 bis 11, wobei der Fixiermechanismus zum Fixieren des Fixierschlittens (113) entlang der Wegstreckeneinheit (100) eine Brems- oder Feststelleinheit aufweist.

13. Vorrichtung nach einem oder mehreren der Ansprüche 9 bis 12, wobei der Fixierschlitten (113) an der Wegstreckeneinheit (100) vermittels Schienenmittel verschiebbar angeordnet ist.

14. Vorrichtung nach einem oder mehreren der vorhergehenden Ansprüche, wobei die Transporthilfsmittel eine Befördereinheit und/oder zumindest ein Wegplattenelement umfassen.

15. Vorrichtung nach Anspruch 14, wobei die Wegstreckeneinheit (100) entlang der Beförderungsstrecke ein Streckenbett (102) zum wahlweisen Bereitstellen der Befördereinheit und/oder des Wegplattenelements (200) aufweist.

16. Vorrichtung nach Anspruch 14 oder 15, wobei das Wegplattenelement (200) ein oder mehrere Wegplattenstücke (200-1; 200-2; 200-3; 200-4) umfasst,

17. Vorrichtung nach Anspruch 16, wobei die Wegplattenstücke (200-1; 200-2; 200-3; 200-4) über einen Verbindungsmechanismus verbindbar ausgebildet sind, wobei der Verbindungsmechanismus einen Steckmechanismus zum führenden und versteifenden Ausrichten der Wegplattenstücke (200-1; 200-2; 200-3; 200-4) in der Verbindung umfasst.

18. Vorrichtung nach Anspruch 17, wobei der Steckmechanismus umfasst
a. auf einer ersten Seite des Wegplattenstücks (200-1; 200-2; 200-3; 200-4) einen Profilhohlraum
b. auf einer zweiten Seite des Wegplattenstücks zumindest ein Steckelement
wobei der Profilhohlraum zum Steckelement so ausgebildet ist, dass im verbundenen Zustand zweier Wegplattenstücke (200-1; 200-2; 200-3; 200-4) das Steckelement vollständig und bündig und die Wegplattenstücke (200-1; 200-2; 200-3; 200-4) ausrichtend in den Profilhohlraum steckbar ist.

19. Vorrichtung nach Anspruch 18, wobei das Streckelemente Steckbolzen (204) beinhaltet.

20. Vorrichtung nach einem oder mehreren der Ansprüche 16 bis 19, wobei der Verbindungsmechanismus einen Rastmechanismus umfasst, wobei der Rastmechanismus auf der ersten Seite eine Verriegelungsöffnung (206) und auf der zweiten Seite ein Federelement (205) umfasst, wobei das Federelement (205) und die Verriegelungsöffnung (206) im verbundenen Zustand zweier Wegplattenstücke (200-1; 200-2; 200-3; 200-4) zueinander verrastbar ausgebildet sind.

21. Vorrichtung nach einem oder mehreren der Ansprüche 15 bis 20, wobei die Wegplattenstücke (200-1; 200-2; 200-3; 200-4) eine Ober- und eine Unterseite (213; 214) aufweisen, wobei zwischen der Ober- und Unterseite (213; 214) der Profilhohlraum ausgebildet ist, wobei zur ersten Seite in der Unterseite (213) die Verriegelungsöffnung (206) vorgesehen ist und an der zweite Seite überstehend das Federelement (205) so ausgebildet ist, dass es im verbundenen Zustand zweier Wegplattenstücke (200-1; 200-2; 200-3; 200-4) über den Profilhohlraum mit der Verriegelungsöffnung (206) verrastbar ist.

22. Vorrichtung nach einem oder mehreren der Ansprüche 16 bis 21, wobei das oder die Wegplattenstücke (200-1; 200-2; 200-3; 200-4) zum Bereitstellen des Profilhohlraums auf Basis eines Hohlprofils ausgebildet sind.

23. Vorrichtung nach einem oder mehreren der Ansprüche 15 bis 22, wobei das Streckenbett (102) einen aus Führungsflanken (120) und einem Führungsboden (121) gebildeten Führungsgang (119) zur geführten Aufnahme der Befördereinheit und/oder des Wegplattenelements (200) aufweist.

24. Vorrichtung nach Anspruch 25, wobei im Führungsgang Gleitmittel zum führenden Gleiten der Wegplattenstücke (200-1; 200-2; 200-3; 200-4) und der Befördereinheit vorgesehen sind.

25. Vorrichtung nach Anspruch 26, wobei die Gleitmittel in Form von Gleitbelägen (122) und/oder Kugelrollenelemente entlang der Führungsflanken (120) ausgebildet sind.

26. Vorrichtung nach einem oder mehreren der vorhergehenden Ansprüche, wobei die Transporthilfsmittel Schienenmittel beinhalten.

27. Vorrichtung nach einem oder mehreren der Ansprüche 14 bis 26, wobei die Schienenmittel zum Führen des Wegplattenelements (200) und/oder der Befördereinheit ausbildbar sind.

28. Vorrichtung nach Anspruch 26 oder 27, wobei die Schienenmittel im Führungsgang (119) zwischen den Führungsflanken (120) vorsehbar sind.

29. Vorrichtung nach einem oder mehreren der Ansprüche 24 bis 28, wobei die Schienenmittel der Befördereinheit zu und entlang der Gleitmittel verlaufende Kufenelemente (301) beinhalten.

30. Vorrichtung nach einem oder mehreren der Ansprüche 27 bis 29, wobei die Schienenmittel des Wegplattenelements (200) ein zu und entlang der Führungsflanken (120) verlaufendes Gleitprofil beinhalten.

31. Vorrichtung nach Anspruch 30, wobei die Gleitprofile eine erste und eine zweite Gleitseiten (216; 217) aufweisen,

32. Vorrichtung nach Anspruch 31, wobei die zweiten Gleitseiten (217) entlang der Führungsflanke (120) und die ersten Gleitseiten (216) oberhalb des Führungsgang (119) auf und entlang eines ersten Streckenbettrandbereichs (125) zur Führungsflanke (120) verlaufen.

33. Vorrichtung nach einem oder mehreren der Ansprüche 14 bis 32, wobei das Wegplattenelement (200) und/oder das Wegplattenstück (200-1; 200-2; 200-3; 200-4) ein Anschlagteil (210) mit oder ohne Griffelement umfasst.

34. Vorrichtung nach einem oder mehreren der Ansprüche 16 bis 33, wobei am Wegplattenstück (200-1; 200-2; 200-3; 200-4) ein Fixierelement zum Lagefixieren des Wegplattenstücks (200-1; 200-2; 200-3; 200-4) im Führungsgang (119) vorgesehen ist.

35. Vorrichtung nach einem oder mehreren der Ansprüche 14 bis 34, wobei die Befördereinheit eine Transporthalbschale (300) zum Transport von Personen und/oder Gegenständen aufweist.

36. Vorrichtung nach einem oder mehreren der vorhergehenden Ansprüche, wobei die Vorrichtung ein Stützmodul (400-1; 400-2) zum Aufbau und/oder Halten der Wegstreckeneinheit (100) umfasst.

37. Vorrichtung nach Anspruch 35, wobei das Stützmodul (400-1; 400-2) einen Scherenmechanismus zum höhenverstellbaren Abstützen der Wegstreckeneinheit (100) umfasst.
